# EUROPEAN PATENT SPECIFICATION

(11) **EP 2 460 568 B1**
(45) Date of publication and mention of the grant of the patent: **25.07.2018**
(21) Application number: 12150446.8
(22) Date of filing: 09.02.2007
(51) Int. Cl.: A63F 13/98, A63F 13/21, A63F 13/23

(54) **Electronic game with overlay card**
Elektronisches Spiel mit Overlay-Karte
Jeu électronique doté d'une carte de recouvrement

(43) Date of publication of application: 06.06.2012
(62) Divisional of application: 07756839.2
(73) Proprietor: Disney Enterprises, Inc., Burbank, CA 91521 (US)
(72) Inventor: Matsumoto, Tsuyoshi, Kisarasu, Chiba 292-0814 (JP); Kuribayashi, Masaru, Fushimi-ku, Kyoto 612-8373 (JP)
(74) Representative: Viering, Jentschura & Partner mbB Patent- und Rechtsanwälte

(56) References cited:
- EP-A1- 0 672 981
- US-A1- 2002 021 289
- US-A1- 2005 164 148
- US-B1- 6 636 203
- MATTEL ELECTRONICS: "Baseball", INTELLIVISION CARTRIDGE INSTRUCTIONS, 1979, pages 1-15, XP002544228,

## Description

The invention relates to a game system according to the characterizing part of claim 1.

Portable or hand-held game machines continue to increase in popularity. Typically, these portable game machines include a hand-held game machine housing a processing unit and memory for executing a stored game program, as well as associated hardware such as a display for displaying images of the game and controls for implementing user interaction. The game program itself is typically contained in a game program memory such as, for example, a semiconductor memory (e.g., ROM, EPROM, and the like) that is part of a removable cartridge.

User input to general-purpose computers is generally implemented through keyboards and control buttons. Graphical user interfaces implement pointing devices such as mice and touch pads that are commonly used with general-purpose computers, but less frequently used in game consoles. Game consoles support special purpose user input devices such as joysticks, special purpose buttons, rocker switches and the like.

More recently, handheld game devices have been introduced that include touch screen input devices. Touch screens comprise a display device together with touch-sensitive overlays that typically comprise either pressure-sensitive (resistive), electrically sensitive (capacitive), acoustically sensitive (SAW - surface acoustic wave) or photosensitive (infrared). The touch-sensitive overlays allows a display to be used as an input device, removing the keyboard and/or the mouse as the primary input device for interacting with the display's content. Such displays can be attached to computers or, as terminals, to networks. One example of a game console incorporating a touch screen as a user interface is the Nintendo® DS™ available from Nintendo of America, Inc.

Touch pads and touch screens enable user input via a pointer such as a finger or more commonly a stylus. A touch pad is akin to a graphics tablet in that it does not include an active display and instead presents a blank surface to the user. In the case of a touch screen, the display beneath the touch screen overlay displays one or more graphic controls that a user selects by touching a portion of the screen overlay above the displayed control with the stylus or other device. In a manner similar to clicking on a screen element using a mouse in a conventional computer, processes executing on the game console detect the selection of the graphic control by the user and launch a programmed responsive behavior. In the context of a game, the selection may cause a character in the game to take a particular action, load a new background, or any desired programmed response.

Computer games often involve the gradual revelation of information and/or additional tools as a game progresses and a player's character gains experience, for example. An entirely self-contained game provides some means to for a player to obtain all of the tools and reveal all of the information contained in the game. However, some games require outside information such as "cheat codes" in order to obtain particular tools, weapons, modes of play, or to learn secret information that is not otherwise available by simply playing the game itself. Because these codes are very much a part of the game to many players, web sites and books have become available to give, sell, or exchange these cheat codes.

Such books are examples of auxiliary products that can enhance the overall user experience and market value of a game. Other examples of auxiliary products include trading cards, stickers, tattoos, tip sheets and the like that can be purchased with a game or separately. In the case of trading cards, secondary games have been developed using the trading cards. The trading card games are substantially separate from the electronic game played on a console, although characters, scenes and situations may be common between them. While existing forms of auxiliary products provide some enhancement of the user experience, they do not directly affect game play of the computer game implemented on the game console.

Accordingly, a need exists for products that interact more directly with a game console and a game implemented on a game console. More specifically, a need exists for systems and methods for providing new ways of user interaction with a computer game using auxiliary products such as trading cards, game cards, coupons and other forms of touch screen overlays.

EP 0 672 981 teaches an input device for a computer system comprising a touch pad and a template overlay that can be placed over the touch pad. The template overlay is made of a thin material such as coated paper, coated cardboard or polyester film. Specifically, a polyester film that is manufactured by Du Pont and widely available under Du Pont's "Mylar" trademark has been suggested. The overlay comprises a graphic design that is written, printed, painted, carved, engraved, silkscreened or otherwise permanently affixed on or in the overlay body.

It is an object of the invention to improve the game system according to the precharacterizing part of claim 1 so that an enhanced overlay card provides more control options for the gaming system.

This is achieved by the features in the characterizing part of claim 1. Advantageous further embodiments are described in the dependent claims.

Briefly stated, the present invention involves systems and methods related to game consoles, game software and games for play on a game console having a touch screen interface. A card having a pattern defined therein is overlaid on the touch screen. The defined pattern is used to activate portions of the touch screen by guiding user interaction with a touch pad or touch screen. The activated portions of the touch pad or touch screen launch responsive activity in a computer program implemented on the game console.

In another aspect the present invention involves a card that is sized to interface with a touch pad or touch screen of a computing device. A pattern is formed in or on the card, wherein the pattern is traceable by a user to guide the user's interaction with the touch pad or touch screen. The pattern comprises a point, line, two-dimensional shape or a combination of thereof. The pattern may be cut into the card, printed on a card surface, or a protrusion from the card surface. The card may be whole or may be cut in smaller pieces that can be assembled in to form a whole card.

In yet another aspect the present invention involves a computer game comprising computer-implemented code having code constructs implementing an interface to a touch pad or touch screen of a computer executing the software. Game play processes within the computer-implemented code are responsive to user inputs from the touch screen to determine whether pre-specified patterns are input through the touch pad or touch screen. The pre-specified patterns are embodied in an overlay card that physically overlays the touch pad or touch screen in operation.

### BRIEF DESCRIPTION OF THE DRAWINGS

Fig. 1 illustrates a game system in accordance with an embodiment of the present invention;
Fig. 2A-Fig. 2D illustrate several exemplary implementations of overlay cards in accordance with the present invention;
Fig. 3A-Fig. 3C illustrate in cross section alternative mechanisms for implementing an overlay card in accordance with the present invention; and
Fig. 4 illustrates a card point area defined by software in a particular implementation of the present invention.

### DETAILED DESCRIPTION

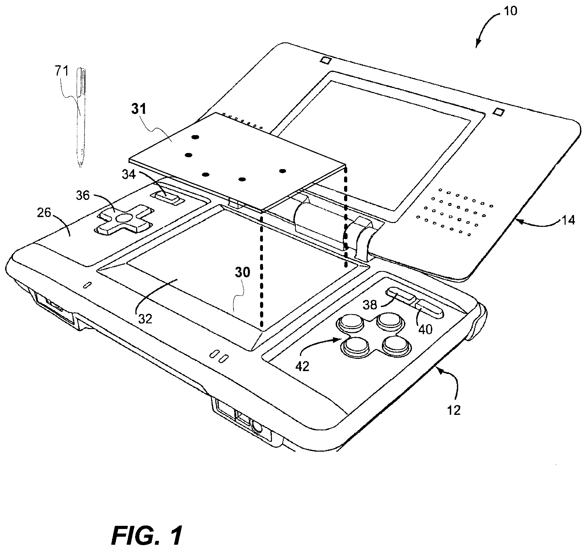

FIG. 1 shows an embodiment of a game device or console 10 suitable for use in conjunction with the present invention. Console 10 includes a main body 12 and a cover body 14 connected to each other along an upper edge of the main body 12 and a lower edge of the cover body 14. In the implementation shown in Fig. 1, hinge elements on main body 12 mesh with hinge elements on the cover body 14, with a hinge pin (not shown) extending through the aligned hinge elements.

In the example of Fig. 1 a first display screen 32 is recessed within the upper face 26 of the main body 12. Display screen 32 comprises, for example, a backlit, color liquid crystal display (LCD). Display screen 32 is touch sensitive and may be activated by a stylus 71. Stylus 71 comprises a plastic pencil-shaped device with a rounded tip that is used to activate the touch screen 32. The transition at the edge 30 of display screen 32 may be tapered, curved or abrupt. Edges 30 provide a convenient mechanism for registration of the overlay card 31 in accordance with the present invention by aligning edges 33 of overlay card 31 with edges 30 of display screen 32.

In the upper right corner of the main body 12, there are side-by-side "start" and "select" buttons 38, 40, respectively, with X/Y/A/B buttons 42 located adjacent and below the "start" and "select" buttons. Buttons 38, 40 and 42 are also used for game play control. A cross-shaped directional control button 36 is located adjacent and below the power button 34, and is used for game play control. Additional control buttons may be located on the peripheral edge of main body 12 or at other desired locations on the upper face 26.

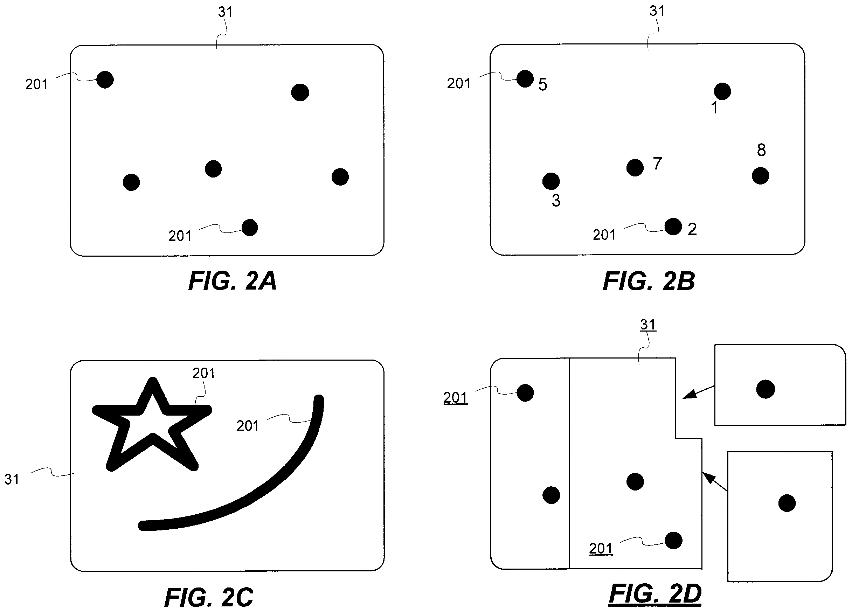

Fig. 2A-Fig. 2D illustrate several exemplary implementations of overlay cards in accordance with the present invention. Fig. 2A illustrates an embodiment similar to that shown in Fig. 1 in which an overlay card 31 contains a pattern 201. Overlay card 31 is constructed from a material such as paper, pressboard, cardboard, plastic, metal or the like. In a particular implementation overlay card 31 is roughly the thickness of a playing card, but may be substantially thicker or thinner in particular applications.

In one embodiment overlay card 31 is sized to fit snugly within the recess defined by edges 30 of a particular game console. In this manner, one face of card 31 contacts touch screen 32 and card 31 is registered with a relatively high degree of precision with touch screen 32. In an alternative embodiment overlay card 31 may be sized smaller than touch screen 32 and some other means of registering card 31 with screen 32 is used. For example, touch screen 32 may display one or more alignment marks or images allowing card 31 to be aligned with touch screen 32 using the visible alignment marks. Card 31 may be larger than touch screen 32 by forming it of a sufficiently flexible material such as paper, foil, plastic film, and the like.

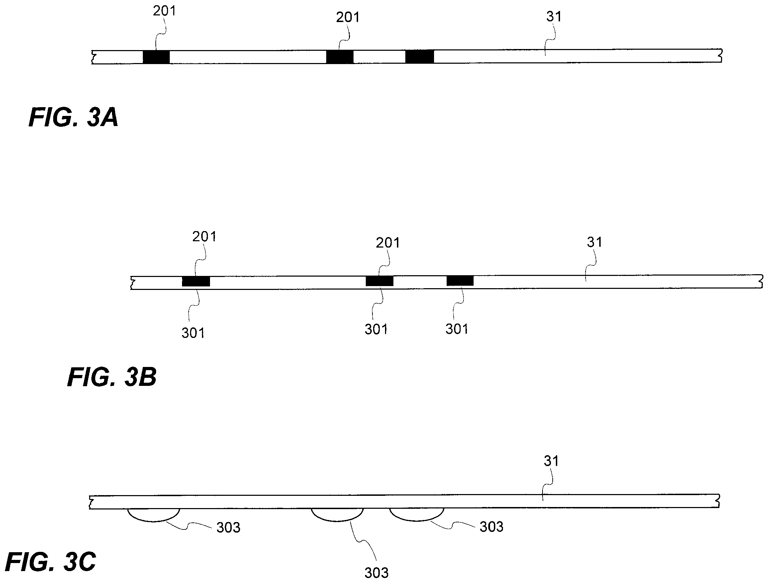

Pattern 201 is defined by punched holes 201 in the implementation of Fig. 2A. Holes 201 may extend completely through card 31 as shown in Fig. 3A or may extend partially through card 31 as shown in Fig. 3B. Alternatively, pattern 201 may be printed only, without punched or holes, when the material chosen for card 31 is sufficiently conformable so that activity of a stylus on the printed pattern is translated to touch screen 32.

In this manner user input to touch screen 32 and in turn a game or other process executing on console 10 is guided by the pattern 201. In Fig. 2A the user places a cursor in or on each of the elements of pattern 201 and thereby specifies a sequence of inputs specified by that particular pattern 201. A large number limitless number of patterns may be defined to fit the needs of a particular application. Because the pattern 201 is physically encoded into or on card 201, the information is easy to enter as it does not require memorization of complex sequences of buttons or controls. Overlay card 31 can be manufactured and distributed efficiently and inexpensively, and the many materials available for overlay card 31 enable a wide range of product differentiation to further engage customers.

Fig. 2B illustrates an embodiment in which pattern 201 must be accessed by the user in a particular order indicated by printed indicia on a surface of card 31. A simple sequence of numbers is shown in Fig. 2B, however, the indicia may comprise other printed symbols or images that guide or prompt a user to select the desired sequence.

In the examples of Fig. 2A and Fig. 2B the pattern is defined by a collection of points or dots. Fig. 2C shows an embodiment in which pattern 201 comprises a line, arc and/or two-dimensional shape. A one- or two-dimensional pattern may be a line or an area that guides a user to follow the pattern with a stylus once card 31 is placed in contact with screen 32. In the case of an area such as the star shape in Fig. 2C, use of the card may require tracing the perimeter of the shape or may require the user to "fill in" the shape by scrubbing the area with a stylus. Additionally, a particular game may require the user to trace the card pattern 201 in a particular direction, or to trace the pattern multiple times such as back and forth. In any embodiment the game may require that a particular pattern be followed within specified time constraints.

Optionally an overlay card may be implemented as multiple pieces such as shown in Fig. 2D. Once the pieces are fit together they form a complete overlay card 31 that can be used to interact with a game. The pieces can be formed so as to fit together in jigsaw fashion if desired. Such an implementation may be useful when the card pieces are distributed as a part of a retail incentive program to encourage repeat business, or similar distribution scheme.

Fig. 3A-Fig. 3C illustrate in cross section alternative mechanisms for implementing an overlay card in accordance with the present invention. In the embodiment of Fig. 3A pattern 201 extends entirely through the thickness of card 31. This can be accomplished by punching, die cutting, laser cutting, etching, or other technique suitable for a particular card material and production process. In the embodiment of Fig. 3A the card 31 can be used by placing a stylus 71 completely through the pattern 201 to contact the touch pad or touch screen. One or more elements of pattern 201 may be used as alignment marks as described hereinbefore.

In the embodiment of Fig. 3B pattern 201 comprises cavities that extend less than completely through card 31 to leave a thinner membrane portion. The membrane portion is sufficiently thin such that a touch pad or touch screen 32 can sense a stylus 71. The implementation of Fig. 3B can be formed by cutting patterns 201 partially through card 31 or by cutting a pattern 201 completely through card 31 and applying a layer of paper, plastic, or similar material to form the membrane portion. In this manner the pattern 201 can be obscured during distribution if desired to deter copying.

In the embodiment of Fig. 3C a pattern is formed by protrusions or bumps 303 on one surface of card 31. Bumps 303 may be formed by screen-printing, adhesives, or other available technique. In the case of a pressure sensitive screen bumps 303 allow a user to input a pattern into a touch pad or touch screen by rubbing the upper surface (i.e., a surface that faces a user) of card 32. This may allow a user to input complex patterns involving near simultaneous activation of a number of points on the touch screen 32 in a manner that would be difficult to perform using a stylus alone.

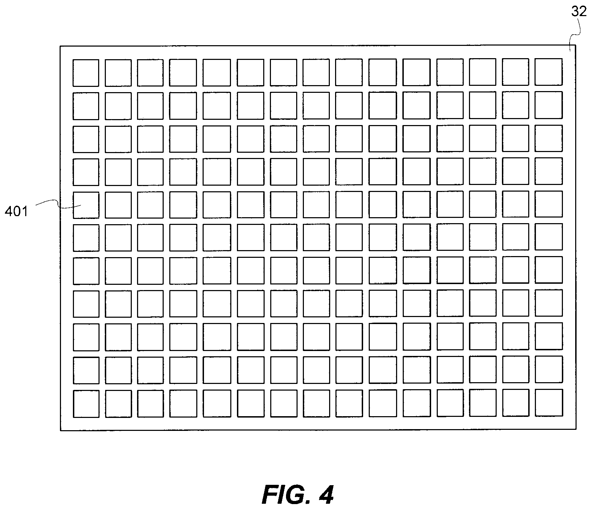

Fig. 4 illustrates a card point area defined by software in a particular implementation of the present invention. In the embodiment of Fig. 4 the touch pad or touch screen writeable area is segmented into a 15X11 array. The granularity of this segmentation is a matter of design choice and is constrained only by the granularity permitted by the touch pad or touch screen mechanism. Less granular arrays may be easier to use and will be more forgiving to misalignment whereas more granular arrays allow more complex patterns to be defined and used. In operation the array may be fully populated such that all areas are active, or sparsely populated such that less than all of the areas are active. For example, if a game is at a point where only a certain card can be played, only elements corresponding to that card may need to be active. On the other hand, activating the entire array allows the program to detect when an incorrect sequence is entered indicating that an incorrect card has been played. Processes executing on the game console may take responsive action for incorrect use.

In operation a game program can be constructed such that a character obtains some benefit. For example, a character may grow stronger or more robust. A character may be given extra life or vitality, or be given new tools or weapons. A character may evolve or grow up more rapidly than permitted by normal game progression. Conversely, a card may signal a negative effect on a character such as weakening the character or stealing a tool or weapon.

Game developers program the effect of a particular card when designing a game. A particular effect is dormant until a particular pattern is applied to the touch pad or touch screen 32. The game may define specific times at which a card pattern may be applied such as at the beginning of a game or round. Alternatively or in addition a game may be designed to prompt a user to use a card if available.

Card 31 can be distributed entirely separate from the particular game with which it is associated. Moreover, a specific card 31 may be useful in more than one game. A game designer will publish, sell, or license the information about various features that can be activated by a game card, and any entity with sufficient rights in the pattern 201 for a particular game can manufacture and distribute cards 31 as desired. This separation of the game and card overlay is not required, but enables great flexibility in providing auxiliary products for a game that enhance the overall user experience.

It is apparent that the present invention is useful in a variety of applications other than computer games. The card overlay is generally useful for entering information using touch pad or touch screen input devices to computers where it is desirable for the user to trace a pattern or activate a sequence of points on the touch screen. Such operation might be useful in activating software or activating features in a software program.

Although certain illustrative embodiments and methods are disclosed herein, it will be apparent from the foregoing disclosure to those skilled in the art that variations and modifications of such embodiments and methods may be made without departing from the true spirit and scope of the art disclosed. Accordingly, it is intended that the art disclosed shall be limited only to the extent required by the appended claims and the rules and principles of applicable law.

Preferably, a game system can comprise a game console having a touch-sensitive pointing device and an overlay card having a pattern therein, wherein the pattern on the card guides use of the touch-sensitive pointing device.

Preferably, the pointing device comprises a touch pad.

Preferably, the pointing device comprises a touch screen.

Preferably, the pattern can comprise a cavity formed in the overlay card.

Preferably, the pattern can comprise pathways printed on the card material and the card material is sufficiently conformal to translate activity of a stylus on an upper surface to the touch-sensitive pointing device.

Preferably, the pattern can comprise a raised area protruding away from a card surface so that the raise area engages the touch-sensitive pointing device.

Preferably, the game system can further comprise a computing device within the game console, processes executing on the computing device for detecting use of the touch sensitive pointing device, and processes executing on the computing device for taking responsive action to affect game play based on the detected use of the touch-sensitive pointing device.

Preferably, the pattern can comprise a collection of points.

Preferably, the pattern can comprise one or more shapes selected from the group consisting of a line, an arc, a curve, and a two-dimensional shape.

Preferably, a method of implementing a computer-implemented game on a console can have a touch-sensitive pointing device, the method can comprise providing a user with an overlay card having a pattern formed therewith, detecting activity of the touch-sensitive pointing device corresponding, and determining whether the activity of the touch-sensitive pointing device corresponds to a pre-selected pattern that indicates the user has activated the touch-sensitive pointing device using the overlay card.

Preferably, the method can further comprise altering some aspect of the game play based upon detecting that the activity of the touch-sensitive pointing device corresponds to use of the overlay card.

Preferably, the method can further comprise altering some aspect of the game play based upon detecting that the activity of the touch-sensitive pointing device does not correspond to use of the overlay card.

Preferably, the card is provided with the computer-implemented game.

Preferably, the overlay card is provided separately from the computer-implemented game.

Preferably, a card for use in a game system, first surface configured to overlay a touch-sensitive pointing device, a pattern formed with the card, wherein the pattern can correspond to a pattern programmed to be recognized by a game executing in the game system.

Preferably, the card is shaped to register with a touch screen device.

Preferably, at least one surface of the card can contain printed material.

Preferably, the card can comprise one or more materials selected from the group consisting of paper, plastic, and metal.

Preferably, the pattern can comprise one or more cavities extending completely through the card.

Preferably, the pattern can comprise one or more cavities extending partially through the card.

Preferably, the pattern can comprise one or more protrusions extending from one surface of the card.

## Claims

1. A game system comprising:
a game console (10) having a touch-sensitive pointing device including a touch screen (32) for displaying images associated with a game executing in the game console (10), and
an overlay card (31) having a first surface configured to overlay the touch-sensitive pointing device, the overlay card (31) is shaped to register with the touch screen (32),
**characterized in that**
a pattern (201) is formed on the overlay card (31), wherein the pattern (201) on the overlay card (31) corresponds to a pattern (201) recognized by the game executing in the game console (10) to affect a user's game play and wherein the overlay card (31) defines portions of the touch screen (32) that can be activated by the user corresponding to the game-recognized pattern (201) and the overlay card (31) guides use of the touch-sensitive pointing device,
the overlay card (31) is implemented as multiple smaller pieces that are adapted to fit together to form the complete overlay card (31) when the smaller pieces are assembled together; and
the pattern (201) comprises one or more cavities formed in the overlay card (31) and extending completely or partially through the overlay card (31) and the shape of the pattern (201) is selected from the group consisting of: punched holes, a line, an arc, a curve, and a two-dimensional shape.

2. The game system of claim 1 wherein the pattern (201) comprises one or more protrusions (303) protruding away from a card surface so that the one or more protrusions (303) engage the touch-sensitive pointing device.

3. The game system of any of the preceding claims wherein at least one surface of the overlay card (31) contains printed material.

4. The game system of any of the preceding claims wherein the overlay card (31) comprises one or more materials selected from the group consisting of: paper, plastic, and metal.

## Patentansprüche

1. Spiel-System mit
einer Spielkonsole (10), die eine berührungssensitive Zeigevorrichtung hat, die einen Berührungsbildschirm (32) zum Anzeigen von Bildern aufweist, die mit einem Spiel assoziiert sind, das auf der Spielkonsole (10) ausgeführt wird, und einer Auflege-Karte (31), die eine erste Fläche hat, die konfiguriert ist, um die berührungssensitive Zeigevorrichtung zu überlagern, wobei die Auflege-Karte (31) gestaltet ist, um sich bei dem Berührungsbildschirm (32) zu registrieren, **dadurch gekennzeichnet, dass**
ein Muster (201) auf der Auflege-Karte (31) ausgebildet ist, wobei das Muster (201) auf der Auflege-Karte (31) zu einem Muster (201) korrespondiert, das von dem auf der Spielkonsole (10) ausgeführten Spiel erkannt wird, um das Spielespiel eines Benutzers zu beeinflussen, und wobei die Auflege-Karte (31) Abschnitte des Berührungsbildschirms (32) definiert, die von dem Benutzer aktiviert werden können, korrespondierend zu dem Spiel-erkannten Muster (201) und die Auflege-Karte (31) die berührungssensitive Zeigevorrichtung führt,
wobei die Auflege-Karte (31) implementiert ist als mehrere kleinere Stücke, die angepasst sind, um zusammenzupassen, um die komplette Auflege-Karte (31) zu bilden, wenn die kleineren Stücke zusammengebracht sind,
wobei das Muster (201) eine oder mehre Kavitäten aufweist, die in der Auflege-Karte (31) ausgebildet sind und sich komplett oder teilweise durch die Auflege-Karte (31) hindurch erstrecken, wobei die Gestalt des Musters (201) ausgewählt ist aus der Gruppe bestehend aus: Stanzlöchern, einer Linie, einem Bogen, einer Kurve und einer zwei-dimensionalen Gestalt.

2. Spiel-System gemäß Anspruch 1, wobei das Muster (201) aufweist einen oder mehr Vorsprünge (303), die von einer Kartenfläche aus weg vorstehen, sodass der eine oder die mehr Vorsprünge (303) mit der berührungssensitiven Zeigevorrichtung im Eingriff stehen.

3. Spiel-System gemäß irgendeinem der vorhergehenden Ansprüche, wobei wenigstens eine Fläche der Auflege-Karte (31) ein gedrucktes Material enthält.

4. Spiel-System gemäß irgendeinem der vorhergehenden Ansprüche, wobei die Auflege-Karte (31) ein oder mehr Materialien aufweist, die ausgewählt sind aus der Gruppe bestehend aus Papier, Kunststoff und Metall.

## Revendications

1. Système de jeu comprenant :
une console de jeu (10) comportant un dispositif de pointage tactile comprenant un écran tactile (32) pour afficher des images associées à un jeu s'exécutant dans la console de jeu (10), et
une carte de superposition (31) ayant une première surface configurée pour recouvrir le dispositif de pointage tactile, la carte de superposition (31) étant formée pour s'aligner avec l'écran tactile (32),
**caractérisé en ce que**
un motif (201) est formé sur la carte de superposition (31), dans lequel le motif (201) sur la carte de superposition (31) correspond à un motif (201) reconnu par le jeu s'exécutant dans la console de jeu (10) pour affecter le jeu d'un utilisateur et dans lequel la carte de superposition (31) définit des parties de l'écran tactile (32) qui peuvent être activées par l'utilisateur correspondant au motif reconnu par le jeu (201) et la carte de superposition (31) guide l'utilisation du dispositif de pointage tactile,
la carte de superposition (31) est mise en oeuvre en tant que multiples plus petites pièces qui sont conçues pour s'assembler les unes avec les autres pour former la carte de superposition (31) complète lorsque les plus petites pièces sont assemblées les unes avec les autres ; et
le motif (201) comprend une ou plusieurs cavités formées dans la carte de superposition (31) et s'étendant complètement ou partiellement à travers la carte de superposition (31) et la forme du motif (201) est sélectionnée dans le groupe consistant en : des trous poinçonnés, une ligne, un arc, une courbe, et une forme bidimensionnelle.

2. Système de jeu selon la revendication 1, dans lequel le motif (201) comprend une ou plusieurs protubérances (303) faisant saillie hors d'une surface de carte de sorte que lesdites une ou plusieurs protubérances (303) viennent en prise avec le dispositif de pointage tactile.

3. Système de jeu selon l'une quelconque des revendications précédentes, dans lequel au moins une surface de la carte de superposition (31) contient un matériau imprimé.

4. Système de jeu selon l'une quelconque des revendications précédentes, dans lequel la carte de superposition (31) comprend un ou plusieurs matériaux sélectionnés dans le groupe consistant en : du papier, une matière plastique, et un métal.
